**Europäisches Patentamt**

**European Patent Office**

**Office européen des brevets**

(19)

(11) Veröffentlichungsnummer : **0 356 816 B1**

(12)

# EUROPÄISCHE PATENTSCHRIFT

(45) Veröffentlichungstag der Patentschrift :
**20.05.92 Patentblatt 92/21**

(51) Int. Cl.⁵ : **C05F 17/00**

(21) Anmeldenummer : **89115156.5**

(22) Anmeldetag : **17.08.89**

(54) **Verfahren zur Umwandlung von Biomasse.**

Verbunden mit 89910432.7/0386221
(europäische
Anmeldenummer/Veröffentlichungsnummer)
durch Entscheidung vom 05.02.91.
Die Akte enthält technische Angaben, die nach
dem Eingang der Anmeldung eingereicht
wurden und die nicht in dieserPatentschrift
enthalten sind.

(30) Priorität : **19.08.88 DE 3828186**

(43) Veröffentlichungstag der Anmeldung :
**07.03.90 Patentblatt 90/10**

(45) Bekanntmachung des Hinweises auf die
Patenterteilung :
**20.05.92 Patentblatt 92/21**

(84) Benannte Vertragsstaaten :
**AT BE CH DE ES FR GB IT LI LU NL SE**

(56) Entgegenhaltungen :
**EP-A- 0 152 524**
**DE-B- 1 013 300**
**DE-B- 1 151 005**
**FR-A- 2 463 109**
**GB-A- 1 498 938**
**E.E. PFEIFFER: "Anleitung für die Kompostfa-**
**brikation aus städtischen und industriellen**
**Abfällen", 1957, Seiten6,7,16,17,20-**
**23,28-31,38,39, Gustav Fischer Verlag, Stutt-**
**gart, DE**
**IDEM**

(73) Patentinhaber : **Römer, Rudolf**
**Simon-Hermann-Post-Weg 15**
**W-2800 Bremen 33 (DE)**

(72) Erfinder : **Schmitt, Martin Erich**
**Postfach 34 70 27**
**W-2800 Bremen 34 (DE)**

(74) Vertreter : **Eisenführ, Speiser & Strasse**
**Balanstrasse 55**
**W-8000 München 90 (DE)**

## Beschreibung

Die Erfindung betrifft ein Verfahren zur Umwandlung von Biomasse in Bodenverbesserungs-, Dünge- und/oder Pflanzenwuchssubstrat-Stoffe, bei dem die gehäufte, ggf. zerkleinerte Biomasse bis zum Erreichen des gewünschten Umwandlungsgrades der Einwirkung natürlicher Zersetzungsvorgänge unterzogen wird.

Solche Verfahren werden seit langem dazu eingesetzt, anderweitig nicht mehr verwertbare Biomasse wieder in den Produktionskreislauf zurückzuführen. Die Biomasse wird dazu üblicherweise, ggf. beispielsweise durch Schreddern, grob zerkleinert, auf gehäuft und der Einwirkung natürlicher Mikroorganismen u.dgl. überlassen. Die Einbringung der verschiedenen Arten von Biomasse in den Haufen erfolgt meist ungeordnet, je nach Anfall.

Die Umwandlung der Biomasse in solchen Haufen erfolgt entsprechend unkontrolliert. Die erhaltenen Produkte sind daher inhomogen.

Ein wesentliches Merkmal der im Stand der Technik bekannten Verfahren ist, daß gasförmige und flüssige Umwandlungsprodukte entweichen können; dies wird von fachkundiger Seite sogar als notwendig angesehen. Dadurch bleiben aber nicht nur wertvolle Bestandteile der Biomasse ungenutzt; die durch die bekannten Verfahren erhältlichen Produkte sind außerdem, wie der Erfinder überraschend festgestellt hat, in ihrer Wirksamkeit als Bodenverbesserungs-, Dünge- bzw. Pflanzenwuchssubstrat-Stoffe schon aus diesem Grund nicht optimiert.

Aufgabe der Erfindung ist es, ein Verfahren der eingangs genannten Art zu schaffen, das mit einfachsten Mitteln eine wesentlich vollständigere Umwandlung der Biomasse gestattet und Umwandlungsprodukte liefert, die eine wesentliche höhere Wirksamkeit als Bodenverbesserungs-, Dünge- und/oder Pflanzenwuchssubstrat-Stoffe zeigen.

Zur Lösung dieser Aufgabe dienen die Merkmale des Hauptanspruchs; vorteilhafte Ausgestaltungen sind in den Unteransprüchen definiert.

Die Merkmale und Vorteile der Erfindung werden in der folgenden beispielhaften Beschreibung bevorzugter Ausführungsformen anhand der beigefügten Zeichnung verdeutlicht. In der Zeichnung zeigen

Fig. 1 einen schematischen Querschnitt einer Miete gemäß einer ersten bevorzugten Ausführungsform der Erfindung und

Fig. 2 einen ähnlichen Querschnitt einer Miete gemäß einer zweiten bevorzugten Ausführungsform der Erfindung.

In der folgenden Beschreibung sind gleiche Elemente durchgehend mit gleichen Bezugszeichen versehen, wobei die entsprechenden Elemente der zweiten Ausführungsform durch einen Indexstrich hervorgehoben sind.

Bei der Durchführung des erfindungsgemäßen Verfahrens wird Biomasse unterschiedlicher Art eingesetzt. Besonders vorteil haft ist dabei die Verwendung von auf Sägemehl-Korngröße zerkleinertem Holz zur Aufnahme und Rückhaltung flüchtiger Umwandlungsprodukte. Die außenseitige Abdeckung erfindungsgemäß aufgebauter Mieten, in denen sich die Umwandlung der Biomasse vollzieht, durch dieses besonders absorptionsfähige Material ermöglicht gleichzeitig einen Luftzutritt in solchem Umfang, daß es nicht zur Fäulnis kommt (wie dies bei Luftabschluß der Fall wäre, beispielsweise bei Abdecken der Miete mit Folie oder Erde).

An Biomasse wird neben dem zerkleinerten Holz Grünzeug, Stroh u.dgl. sowie Mist verwendet, und zwar in jeweils einheitlichen, übereinanderliegenden Schichten, wie noch beschrieben werden wird.

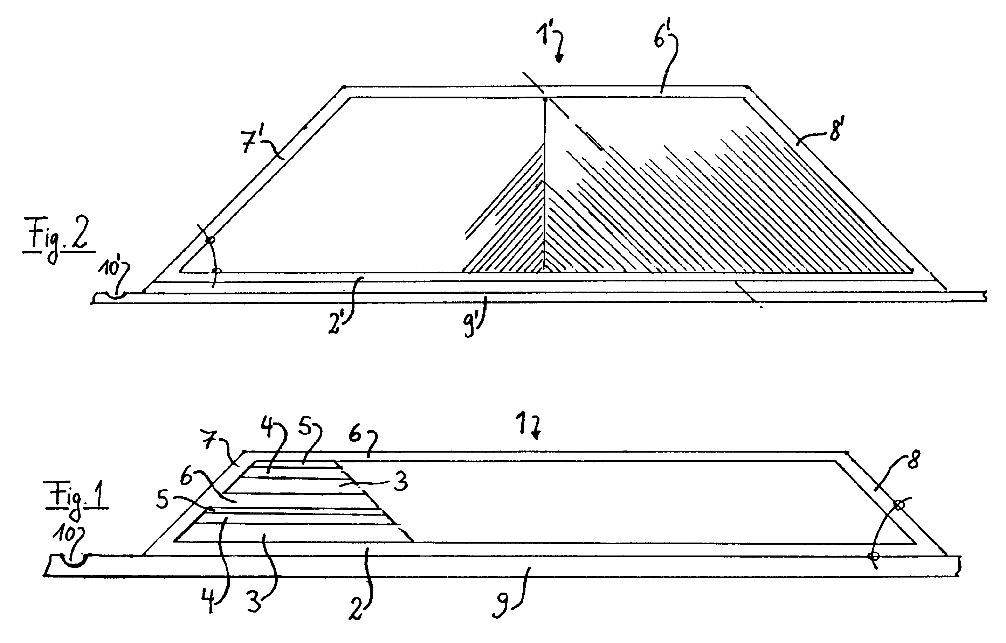

Fig. 1 zeigt eine erfindungsgemäß aufgebaute Miete 1 mit waagerechter Schichtung. Die Miete liegt auf einer Betonsohle 9, die außerhalb der von der Miete bedeckten Fläche eine Sammelrinne 10 aufweist. Diese Sammelrinne 10 dient dazu, eventuell austretende Flüssigbestandteile in die Miete zurückführen zu können; die Betonsohle ist zur Unterstützung dieser Funktion mit einem leichten Gefälle (mindestens 2°) so verlegt, daß austretende Flüssigkeit zur Sammelrinne 10 hin abläuft. Es ist festzuhalten, daß üblicherweise keine Flüssigbestandteile auslaufen, da sie in der Miete zurückgehalten werden; die Sammelrinne 10 kommt nur in Einzelfällen zum Tragen. Es versteht sich, daß statt Beton auch ein anderes, im wesentlichen wasserundurchlässiges Material verwendet werden kann, beispielsweise Lehm; Kunststoffmaterial wird weniger bevorzugt.

Auf der Betonsohle 9 liegt eine (im Ausführungsbeispiel etwa 20 cm dicke) Schicht 2 aus Holz, das auf Sägemehl-Korngröße zerkleinert ist. Diese Holzschicht saugt nach unten durchtretende flüssige Umwandlungsprodukte auf und wird beim Ablauf des erfindungsgemäßen Verfahrens selbst mit umgewandelt. Die Dicke der untersten Holzschicht 2 wird man stets so wählen, daß sie einerseits dieser Absorptionsfunktion genügen kann; eine darüber hinausgehende Dicke wird man nach Möglichkeit vermeiden.

Als Material für die unterste Holzschicht 2 (wie auch für die im folgenden noch erwähnten weiteren Schichten aus zerkleinertem Holz) eignen sich beispielsweise Holzabfälle aus Sägemühlen, Schreinereien, Zimmereien, aus dem Fensterbau, aus Furnierwerken, aus der Waldsäuberung usw., beispielsweise Stämme und Äste von mehr als 30 mm Stärke. Borke und Rinde kann mit zerkleinert werden. Bei der Verwendung von Nadel-

2

holz sollte darauf geachtet werden, keine größeren Mengen von Nadeln einzuarbeiten, da diese die Umwandlungsvorgänge nachteilig beeinflussen können.

Über dieser untersten Schicht 2 aus zerkleinertem Holz liegt eine Schicht 3 aus Grünzeug. Die Schicht ist üblicherweise zwischen 10 cm und 40 cm dick, jedoch hängt ihre Dicke stark von der Art des zur Verfügung stehenden Grünzeugs ab, insbesondere von dessen Zerkleinerungsgrad, Sperrigkeit usw. Als Grünzeug eignet sich beispielsweise verschmähtes Weidefutter, Rübenblätter, Kartoffelkraut, Wegraine, Heckenschnitt, Abfall aus der Anlagenreinigung, Rasenschnitt, Karottenkraut, Selleriegrün, Gemüse- und Salatabfälle, Traubentrester, Biertrester, Abfälle aus Getreidesilos, Mühlen, Konservenfabriken wie auch anderen Zweigen der Lebens- und Genußmittelherstellung, sogar Bioabfälle aus Stadtmüll, Wasserpflanzen, Zuckerrohr, Laub, Zweig- und Strauchwerk aus der Waldsäuberung u.dgl. mehr.

Auch Fruchtabfälle können anteilig eingebracht werden. Die Biomasse wird mit natürlicher Feuchte eingebracht; insbesondere eignet sich regenfeuchtes Grünzeug. Eine Verdichtung der Biomasse sollte nicht erfolgen. Pflanzenteile, die mikrozide bzw. phytonzide Inhaltsstoffe aufweisen, sollten nicht verwendet werden; beispielsweise wären größere Mengen grüner Rhododendronblätter ggf. störend.

Je nach Bedarf kann das Grünzeug zerkleinert sein; beispielsweise sollten Zweige u.dgl. geschreddert werden.

Auf die Grünzeugschicht 3 wird eine Schicht 4 aus feuchtem Stroh aufgebracht. Das Stroh sollte nicht naß, aber oberflächig feucht sein. Es wird ungeschreddert eingebracht, und zwar vorzugsweise so sperrig wie möglich. Für die Strohschicht 4 eignen sich beispielweise Raps-, Getreide-, Maisstroh, Sonnenblumenstroh, Baumwoll- und Hanfabfälle, Hülsenfruchtstroh, Sojastroh, auch verdorbenes Heu, Schilf, trockenes Laub u.dgl.

Auf die Strohschicht 4 folgt eine Schicht 5 aus Mist. Wird ausschließlich Rindermist, insbesondere Kuhmist, verwendet, dann genügt eine relativ dünne Schicht. Der Mist kann insbesondere frisch, gut aufgelockert aufgebracht werden. Wird Mist aus dem Hochbett verwendet, dann sollte dieser geschreddert werden. Die Mitverwendung anderer Mistsorten neben Rindermist ist möglich.

Über der Mistschicht 5 liegt eine weitere Schicht 6 aus Holz, das auf Sägemehl-Korngröße zerkleinert ist. Mit dieser weiteren Schicht ist eine vollständige Schichtenfolge im Sinne der Erfindung abgeschlossen. Wie Fig. 1 zeigt, kann auf dieser weiteren Schicht aus zerkleinertem Holz mit Vorteil eine zweite Schichtenfolge aufgebaut werden, und zwar in der gleichen Reihenfolge wie vorstehend beschrieben. Für diese zweite Schichtenfolge bildet die weitere Schicht 6 aus zerkleinertem Holz dann die unterste Schicht; auf die Holzschicht 6 folgt eine zweite Grünzeugschicht 3, eine zweite Strohschicht 4 und eine zweite Mistschicht 5. Auf diese folgt wieder eine Schicht 6 aus zerkleinertem Holz, die im Ausführungsbeispiel der Fig. 1 gleichzeitig die oberste, abschließende Schicht der Miete 1 bildet. Diese Miete wäre in der Praxis dann ungefähr 2 m hoch; die aus horizontalen Schichtfolgen aufgebaute Miete kann durch Hinzufügen weiterer Schichtfolgen der genannten Art auf eine Gesamthöhe von bis zu 3 Metern gebracht werden.

Wesentlich ist, daß in jedem Fall die oberste Schicht der Miete 1 wieder von einer Schicht 6 aus zerkleinertem Holz gebildet wird. Diese Schicht muß so dick sein, daß sie die flüchtigen Umwandlungsstoffe absorbieren kann, die bei der Umwandlung in der Miete freigesetzt werden. Ob die oberste Schicht dick genug ist, läßt sich sehr leicht daran erkennen, daß bei ungenügender Dicke eine dunkle Verfärbung durchschlägt. In diesem Fall muß die oberste Holzschicht durch Hinzufügen von weiterem zerkleinerten Holz verstärkt werden. Üblicherweise genügt eine Schichtdicke der obersten Holzschicht 6 von 10 cm bis 20 cm. Es ist wichtig, daß beim Aufbau der Miete die Arbeit für längere Zeit nur dann unterbrochen wird, wenn die letzte aufgebrachte Schicht eine Schicht aus zerkleinertem Holz ist, also die erfindungsgemäß notwendige Abdeckung gewährleistet ist.

Bezogen auf das Gesamtvolumen einer Schichtfolge aus unterster Holzschicht 2, Grünzeugschicht 3, Strohschicht 4 und Mistschicht 5 ist es vorteilhaft, wenn der Volumenanteil der untersten Holzschicht 2 etwa 25%, derjenige der Grünzeugschicht etwa 40%, derjenige der Strohschicht etwa 30% und der der Mistschicht etwa 3% ist. Wenn, was ohne weiteres möglich und auch sehr vorteilhaft ist, mehr Mist eingebracht werden soll, dann kann der Mistanteil bis auf ungefähr 30% erhöht werden, wobei jedoch der Mindestanteil von 3 Vol.% Kuhmist erhalten bleiben soll. Bei solchermaßen erhöhtem Mistanteil sollte zur Erzielung optimaler Ergebnisse die Miete während der Umwandlung umgesetzt werden.

Die in Fig. 1 gezeigte Miete 1 kann mit stark variabler Breite ausgeführt werden; üblicherweise liegt die Breite zwischen 7 m und 20 m. Die Länge der Miete ist beliebig. Die Höhe der Miete beträgt, wie schon gesagt, zwischen 2 m und 3 m.

An den Seitenflächen hat die Miete 1 seitliche Außenschichten 7, 8 aus auf Sägemehl-Korngröße zerkleinertem Holz, die die unterste Holzschicht 2 mit der obersten, die Miete 1 oberseitig abschließenden Holzschicht 6 verbinden. Der Neigungswinkel der seitlichen Holzschichten 7, 8 gegen die Horizontale liegt ungefähr zwischen 45° und 51°, so daß die Miete stabil ist und die seitlichen Holzschichten 7, 8 nicht abrutschen.

Unmittelbar nach dem Aufbau kann in Höhe der Grünzeugschicht 3 ein Schlitz in der seitlichen Holzschicht 7, 8 verbleiben, der dann zwei Tage später mit zerkleinertem Holz geschlossen wird. Dieser Schlitz dient in vorteilhafter Weise dazu, eine anfängliche stärkere Luftzufuhr zur Grünzeugschicht zu ermöglichen. Inhaltsstoffe entweichen dabei jedoch nicht, denn sie werden von den glockenartig über der Grünzeugschicht liegenden Holzschichten aufgefangen oder von der untersten Holzschicht 2 absorbiert.

Einen abgewandelten Aufbau hat die Miete 1' gemäß Fig. 2. In dieser stehen die Schichtenfolgen, die ansonsten ganz der oben für die Miete gemäß Fig. 1 beschriebenen Schichtenfolge entsprechen, jeweils schräg zu einer senkrechten Mittelebene der Miete 1' geneigt. Beim Aufbau dieser Miete kann zur Unterlüftung eine Lage (etwa 20 cm stark) kräftige Reisigäste auf die Sohle aufgelegt werden, und wird dann oberseitig mit einer ungefähr 10 cm dicken Lage dünner Zweige bedeckt. Auf diese folgt eine Strohschicht, sodann der Schichtenaufbau wie bereits beschrieben. Diese Schicht aus Ästen und Zweigen ist in Fig. 2 zwischen der Sohle 9' und der untersten Holzschicht 2' angedeutet. Eine solche Miete sollte ein- oder zweimal umgesetzt werden.

Auch die Miete 1' in der zweiten bevorzugten Ausführungsform ist allseitig durch Schichten aus zerkleinertem Holz 2', 7', 8', 6' abgedeckt. Sie ist vorzugsweise zwischen 15 m und 20 m breit, bei beliebiger Länge, und kann ohne weiteres bis zu einer Höhe von 5 m aufgebaut werden.

Bei sehr hohem Mistanteil muß diese Miete umgesetzt werden; ihre Höhe sollte dann ungefähr 3,5 m nicht überschreiten.

Die erfindungsgemäß zur allseitigen Umhüllung der Miete eingesetzten Schichten aus feur zerteilben organischen Material, insbesondere aus zerkleinertem Holz sind nach gegenwärtigem Kenntnisstand von besonderer Bedeutung für die Erlangung der Vorteile, die das erfindungsgemäße Verfahren gegenüber allen bekannten Verfahren bieten kann. Die Umwandlungsprozesse sollen innerhalb der Miete so verlaufen, daß Feuchtigkeit und flüchtige Umwandlungsprodukte während der gesamten Umwandlung in der Miete verbleiben, ohne daß diese aber faulen kann, wie dies bei völligem Abschluß gegen die Umgebung der Fall wäre. Auf Sägemehl-Korngröße zerkleinertes Holz besteht aus kleinen Teilchen mit sehr hoher Oberfläche. Durch den Zerkleinerungsvorgang ist es zerfetzt, aufgesplittert, von sehr ungleichmäßiger Form, entsprechend sperrig und porös und damit besonders absorptionsfähig. So kann es die flüchtigen Umwandlungsprodukte und auch die Einbringungsfeuchte der Bestandteile zurückhalten, an sich binden und zur Pflanzennahrung umsetzen. Gleichzeitig wird das Holz praktisch vollständig selbst mit umgewandelt. Es wird angenommen, daß der nicht vollständige Luftabschluß bei gleichzeitiger Zurückhaltung flüchtiger Inhaltsstoffe besonders gute Umwandlungsbedingungen für die verschiedenen Lebewesen ergibt, die die Umwandlung bewirken. Wahrscheinlich entsteht in der erfindungsgemäß aufgebauten Miete ein besonders ausgewogenes Gleichgewicht aerober und anaerober Umwandlungsprozesse, an denen möglicherweise auch Zerfallsvorgänge beteiligt sind, die nicht auf die Aktivitäten von Lebewesen zurückzuführen sind.

Bei Holzmangel können als Abdeckungs- und Dichtungsmaterial für die zur allseitigen Umhüllung der Miete eingesetzten Schichten auch folgende Materialien verwendet werden: Stroh, Maisstengel, Sonnenblumenstengel, Hirsestengel, Artischockenstengel, Klee, Luzerne, Alpha-Alpha, Elefantengras, Baumwollstauden, Zuckerrohr, Schilf und/oder ähnlich strukturierte trockene harte Reste der Pytomasse. Wichtig dabei ist, daß auch dieses Material beim Zerkleinern so stark wie möglich zerissen, aufgerissen, zerfleddert und/oder zerfetzt wird, um den einzelnen Körnern jeweils eine größtmögliche Oberfläche zu geben.

Die erhaltenen festen Umwandlungsprodukte erweisen sich als den Produkten bekannter Verfahren enorm überlegen. Während die anderen Kompostarten reine Bodennahrung sind, in die nicht direkt gepflanzt oder gesät werden kann, ist das erfindungsgemäße Umwandlungsprodukt zudem Pflanzennahrung und -bett für Samen und Jungpflanzen und fördert die Wurzelstockbildung. Mit herkömmlichen Komposten läßt sich beispielsweise als Grenzwert erreichen, daß ein Weizenkorn sechs bis sieben fruchttragende Halme hervorbringt. Läßt man ein entsprechendes Weizenkorn auf dem Umwandlungsprodukt wachsen, das einer erfindungsgemäßen Miete entstammt, dann erhält man aus einem Korn bis zu 28 fruchttragende Halme! Solche Pflanzen sind von unglaublicher Kräftigkeit. Während Faserwurzeln von mit Kunstdünger behandeltem Weizen oder Mais nach einigen Monaten an Luft zu Staub zerfallen sind, sind nach zwei Jahren Lufttrocknung die Faserwurzeln solcher Pflanzen, die auf den erfindungsgemäßen Umwandlungsprodukten gezogen wurden, völlig intakt und brechen auch bei Betasten nicht ab.

Die erfindungsgemäßen Umwandlungsprodukte können als solche als Pflanzenwachstumssubstrate dienen. Sie können aber auch als Bodenverbesserungsmittel eingearbeitet werden. Beispielsweise würden sich Wüsten- und Steppenflächen durch Einarbeitung entsprechender Mengen der erfindungsgemäßen Umwandlungsprodukte in ertragbringende Kulturflächen verwandeln lassen; dabei wäre auch die nötige Wasserrückhaltung im Boden erreicht, da sofort eine saug- und absorptionsfähige Humusschicht entsteht. Mit dem erfindungsgemäßen Umwandlungsprodukt gezogene Pflanzen brauchen wegen ihres besseren Wurzelstocks bis zu 50% weniger Wasserzufuhr.

Die Zeitdauer, in der das erfindungsgemäße Verfahren bis zum Endpunkt abläuft, kann zwischen ungefähr 4 und ungefähr 12 Monaten liegen und durch entsprechende Maßnahmen beeinflußt werden. Vorzugsweise wird eine längere Umwandlungsdauer gewählt. Die Umwandlung kann jedoch stark beschleunigt werden, indem beispielsweise bereits vorhandenes Umwandlungsprodukt als Starter in eine neu aufgebaute Miete eingebracht wird. Alternativ dazu können handelsübliche Kompoststarter in kleiner Menge eingesetzt werden. In beiden Fällen wird das die Beschleunigung erbringende Material beim Aufbau einer erfindungsgemäßen Miete auf die Strohschicht aufgebracht.

Zur beschleunigten Durchführung des Verfahrens kann eine neu aufgebaute Miete an eine bereits bestehende, in der Umwandlung befindliche Miete angeschlossen werden. Dazu wird der "Mutterhaufen" seitlich angestochen, vorzugsweise im Bereich einer Grünzeug- bis Mistschichtfolge; die neue Miete wird dann so an die Muttermiete angelehnt aufgebaut, daß eine direkte Verbindung zu den entsprechenden Schichten der neuen Miete hergestellt wird. Das beim Anstechen der Muttermiete entnommene Material wird auf die Strohschicht des neuen Haufens dünn aufgestreut, woraufhin die Miete durch Aufbringen der Mistschicht und der obersten Holzschicht sogleich fertiggestellt wird.

Es ist möglich, bei der Durchführung des erfindungsgemäßen Verfahrens auch große Mengen Gülle zu verarbeiten. Diese sollte mit Wasser im Verhältnis 1 : 1 verdünnt auf alle Schichten aufgebracht werden. Bei solchen Mieten wird man vorteilhaft den Grünanteil um 20% herabsetzen, den Stroh- und Holzanteil um je 10% erhöhen.

Den Endpunkt der Umwandlung kann man leicht durch Probeentnahme aus der Miete feststellen. Er zeigt sich daran, daß das Material im Inneren der Miete einheitlich schwarz durchgefärbt und bröckelig ist. Bis zum Erreichen des Endpunktes kann der Umwandlungsprozess auch instrumentell verfolgt werden, beispielsweise durch das Einbringen von Sonden, die eine Temperaturüberwachung u.dgl. gestatten; solche Sonden oder Meßfühler können auch dazu dienen, die erwünschte gleichbleibende Feuchte im Inneren der Miete zu kontrollieren. Sollte die Miete einmal aufgrund ungünstiger Witterungsbedingungen zu sehr austrocknen, dann kann Wasser punktweise durch die obere Holzschicht zugegeben werden; die durchfeuchteten Stellen der obersten Holzschicht werden nachfolgend durch Aufbringen weiteren zerkleinerten Holzes abgedeckt.

Es ist möglich, das erfindungsgemäße Verfahren automatisiert durchzuführen, beispielsweise in einer Halle, in der die einzelnen Schichtenbestandteile nacheinander durch Loren o.dgl. zugeführt werden. So können unmittelbar aufeinanderfolgend Holzschicht, Grünzeugschicht, Strohschicht und Mistschicht aufgebracht und dann die abschließende oberste Holzschicht vorgesehen werden. Die Zuführvorrichtungen können dabei mit Schreddervorrichtungen versehen werden. Eine Lore, die der Aufbringung der obersten Holzschicht dient, wird man dann vorteilhaft mit einem Schrapper versehen, der die oberste Holzschicht glattzieht.

Wenn eine Miete umgesetzt werden muß, dann wird zunächst eine unterste Holzschicht der nötigen Dicke vorgesehen. Auf diese kommt Material aus der umzusetzenden Miete, ebenfalls in einer Schichtdicke von ungefähr 20 cm. Das Material wird ggf. angefeuchtet. Darauf folgt eine Schicht geschreddertes Stroh, ungefähr 10 cm stark, ebenfalls angefeuchtet; bis zur gewollten Höhe der Miete folgen dann weitere Schichten von Material aus der umzusetzenden Miete und Stroh. Abgeschlossen wird wieder mit einer Abdeckung aus zerkleinertem Holz.

Bei manchen Materialien kann es wünschenswert sein, die Miete nicht umzusetzen, aber zu belüften. Zu diesem Zweck können vor dem Aufbau der Miete Kabel oder stabförmige Elemente auf der Sohle ausgelegt werden. Auf diesen wird die Miete dann aufgebaut; zur Belüftung werden die Kabel oder Stäbe dann, beispielsweise mit einem Krahn, aufwärts durch die Miete herausgezogen, was die gewünschte Belüftung bewirkt.

## Patentansprüche

1. Verfahren zur Umwandlung von Biomasse in Bodenverbesserungs-, Dünge- und/oder Pflanzenwuchssubstrat-Stoffe, bei dem die gehäufte, ggf. zerkleinerte Biomasse bis zum Erreichen des gewünschten Umwandlungsgrades der Einwirkung natürlicher Zersetzungsvorgänge unterzogen wird, wobei die Biomasse im wesentlichen alblsitig von einer Abdeckschicht eingeben wird, dadurch gekennzeichnet, daß die Abdeckschicht (2, 6, 7, 8) aus fein zerteiltem organischem Material im wesentlichen von Sägemehl Korngröße besteht und eine solche Dicke aufweist, daß die bei der Umwandlung auftretenden flüchtigen Bestandteile im wesentlichen vollständig zurückgehalten werden.

2. Verfahren nach Anspruch 1,
dadurch gekennzeichnet, daß die Abdeckschicht (2, 6, 7, 8) aus Holz, Baumrinde, Stroh, Maisstengel, Sonnenblumenstengel, Hirsestengel, Artischockenstengel, Klee, Luzernen, Alpha-Alpha, Elefantengras, Baumwollstauden, Zuckerrohr, Schilf und/ oder ähnlich strukturierten, trockenen, harten Resten der Phytomasse besteht.

3. Verfahren nach Anspruch 1 oder 2,

EP 0 356 816 B1

dadurch gekennzeichnet, daß die nicht bei starker Sonneneinstrahlung geerntete Biomasse in frisch-, ggf. regenfeuchtem oder entsprechend angefeuchtetem Zustand eingebracht wird.

4. Verfahren nach einem der Ansprüche 1 bis 3,
dadurch gekennzeichnet, daß Biomasse unterschiedlicher Art derart in übereinanderliegenden Schichten (2 bis 6) angeordnet wird, daß jede Schicht im wesentlichen aus Biomasse einer Art besteht.

5. Verfahren nach Anspruch 4,
dadurch gekennzeichnet, daß
die unterste Schicht (2) Bestandteil der Abdeckschicht ist und im wesentlichen aus auf Sägemehl-Korngröße zerkleinertem Holz besteht,
die darüberliegende Schicht (3) im wesentlichen aus Grünzeug besteht,
die darüberliegende Schicht (4) im wesentlichen aus oberflächig feuchtem Stroh besteht,
die darüberliegende Schicht (5) im wesentlichen aus Mist mit einem Gehalt an Rindermist besteht und darüber eine weitere Schicht (6) aufgebracht wird, die Bestandteil der Abdeckschicht ist und im wesentlichen aus auf Sägemehl-Korngröße zerkleinertem Holz besteht.

6. Verfahren nach Anspruch 5,
dadurch gekennzeichnet, daß die Schichtdicke der untersten Schicht (2) aus zerkleinertem Holz zwischen 10 cm und 30 cm, vorzugsweise ungefähr 20 cm, beträgt.

7. Verfahren nach Anspruch 5 oder 6,
dadurch gekennzeichnet, daß die unterste Schicht (2) aus zerkleinertem Holz ungefähr 25% des Gesamtvolumens der unteren vier Schichten ausmacht.

8. Verfahren nach einem der Ansprüche 5 bis 7,
dadurch gekennzeichnet, daß die Grünzeugschicht (3) zerkleinerte, insbesondere geschredderte Grünmaterialien wie Blätter, Halme, Trester, Kraut, Zweige o.dgl. enthält.

9. Verfahren nach einem der Ansprüche 5 bis 8,
dadurch gekennzeichnet, daß die Grünzeugschicht (3) zwischen ungefähr 10 cm und 40 cm dick ist.

10. Verfahren nach einem der Ansprüche 5 bis 9,
dadurch gekennzeichnet, daß die Grünzeugschicht (3) ungefähr 40% des Gesamtvolumens der unteren vier Schichten ausmacht.

11. Verfahren nach einem der Ansprüche 8 bis 10,
dadurch gekennzeichnet, daß unmittelbar nach dem Aufbau in Höhe der Grünzeugschicht (3) eine Öffnung im seitlichen Abschnitt (7, 8) der Abdeckschicht ausgebildet und nach einer bestimmten Zeit wieder geschlossen wird.

12. Verfahren nach Anspruch 11,
dadurch gekennzeichnet, daß die Öffnung nach etwa zwei Tagen geschlossen wird.

13. Verfahren nach einem der Ansprüche 5 bis 12,
dadurch gekennzeichnet, daß die Strohschicht (4) ungefähr 10 cm bis 30 cm dick ist.

14. Verfahren nach einem der Ansprüche 5 bis 13,
dadurch gekennzeichnet, daß die Strohschicht (4) ungefähr 30% des Gesamtvolumens der unteren vier Schichten ausmacht.

15. Verfahren nach einem der Ansprüche 5 bis 14,
dadurch gekennzeichnet, daß die Strohschicht (4) aus ungeschreddertem Stroh besteht, das so voluminös wie möglich eingebracht ist.

16. Verfahren nach einem der Ansprüche 5 bis 15,
dadurch gekennzeichnet, daß die Strohschicht (4) neben Stroh noch trockenes Heu, Schilf, Laub u.dgl. enthält.

17. Verfahren nach einem der Ansprüche 5 bis 16,
dadurch gekennzeichnet, daß die Mistschicht (5) aus Rindermist besteht, der aufgelockert eingebracht wird, und ungefähr 3% vom Gesamtvolumen der unteren vier Schichten ausmacht.

18. Verfahren nach einem der Ansprüche 5 bis 17,
dadurch gekennzeichnet, daß aufbauend auf der weiteren Schicht (6) eine oder mehrere weitere Schichtenfolgen angeordnet werden, die jeweils eine Grünzeugschicht, eine darüberliegende Strohschicht, eine über dieser liegende Mistschicht und eine darüberliegende Schicht aus zerkleinertem Holz umfassen.

19. Verfahren nach einem der Ansprüche 5 bis 18,
dadurch gekennzeichnet, daß alle Schichten im wesentlichen horizontal angeordnet sind.

20. Verfahren nach einem der Ansprüche 5 bis 18,
dadurch gekennzeichnet, daß alle Schichten unter einem Winkel ungleich Null zur Horizontalen geneigt angeordnet sind.

21. Verfahren nach Anspruch 20,
dadurch gekennzeichnet, daß zwei Schichtfolgen mit entgegengesetzter, aber im wesentlichen gleicher Neigung benachbart angeordnet werden.

22. Verfahren nach einem der Ansprüche 5 bis 21,
dadurch gekennzeichnet, daß die Schichten eine Miete bilden.

## Claims

1. Method of converting bio matter into soil-improving, fertilising and/or plant growth substrate materials, in which the heaped and possibly comminuted bio composition is subjected to the action of natural decomposition processes until the desired degree of conversion is reached, the bio composition being substantially enclosed on all sides by a covering layer, wherein the covering layer (2, 6, 7, 8), consists of finely comminuted organic material, substantially of sawdust grain size, and is of such a thickness that the volatile constituents occurring with the conversion are substantially completely retained.

2. Method according to claim 1,
wherein the covering layer (2, 6, 7, 8) consists of wood, tree bark, straw, maize stems, sun-flower stems, millet stems, artichoke stems, clover, lucerne, alpha-alpha, elephant grass, cotton plants, sugar cane, reeds and/or dry, hard residues of similar structure of the phyto mass.

3. Method according to claim 1 or 2,
wherein the bio mass not harvested with strong sun radiation is applied in the fresh or possibly rain-moist or suitably moistened state.

4. Method according to one of the claims 1 to 3,
wherein the biomass of different nature is so arranged in superimposed layers (2 to 6) that each layer consists substantially of bio mass of one type.

5. Method according to claim 4,
wherein the lowermost layer (2) is a constituent of the covering layer and consists essentially of wood comminuted to sawdust granule size, the layer (3) thereabove consists essentially of green material,
the layer (4) above the latter consists essentially of surface-moistened straw,
the layer (5) above the latter consists essentially of compost with a content of farmyard manure, and applied above the latter is another layer which is a component of the covering layer and consists essentially of wood comminuted to sawdust grain size.

6. Method according to claim 5,
wherein the layer thickness of the lowermost layer (2) of comminuted wood is between 10cm. and 30 cm., advantageously about 20 cm.

7. Method according to claim 5 or 6,
wherein the lowermost layer (2) of comminuted wood amounts to about 25% of the total volume of the lower four layers.

8. Method according to one of the claims 5 to 7,
wherein the layer (3) of green material contains comminuted and more especially shredded green materials, such as leaves, husks, stalks, vegetable matter, branches or the like.

9. Method according to one of the claims 5 to 8,
wherein the green vegetable layer (3) has a thickness between 10 cm and 40 cm.

10. Method according to one of the claims 5 to 9,
wherein the green vegetable layer (3) makes up approximately 40% of thE total volume of the lowermost four layers.

11. Method according to one of the claims 8 to 10,
wherein, immediately after the build-up, an opening is formed at the height of the green vegetable layer (3) in the lateral section (7, 8) pf the covering layer and, after a certain time, is closed again.

12. Method according to claim 11,
wherein the opening is closed after about two days.

13. Method according to one of the claims 5 to 12,
characterised in that the straw layer (4) has a thickness of approximately 10 cm. to 30 cm.

14. Method according to one of the claims 5 to 13,
characterised in that the straw layer (4) mates up approximately 30% of the total volume of the lover four layers.

15. Method according to one of the claims 5 to 14,
characterised in that the straw layer (4) consists of unshredded straw, which is applied in a form which is as voluminous as possible.

16. Method according to one of the claims 5 to 15,
characterised in that the straw layer (4) contains dry hay, reeds, leaves and the like in addition to straw.

17. Method according to one of the claims 5 to 16,
characterised in that the compost layer (5) consists of farmyard manure, which is introduced in disintegrated form and makes up approximately 3% of the total volume of the lower four layers.

18. Method according to one of the claims 5 to 17,
characterised in that, for building up, one or more additional layer sequences are arranged on the added layer (6), such sequences consisting of a green vegetable layer, a straw layer disposed thereabove, a layer of manure disposed above this latter and, on top, a layer of comminuted wood.

19. Method according to one of the claims 5 to 18,
characterised in that all layers are arranged substantially horizontally.

20. Method according to one of the claims 5 to 18,
characterised in that all layers are arranged inclined at an angle not equal to zero relatively to the horizontal.

21. Method according to claim 20,
characterised in that two layer sequences are arranged with opposite but substantially equal inclination adjacent one another.

22. Method according to one of the claims 5 to 21,
characterised in that the layers form a clamp.


## Revendications

1. Procédé de transformation de biomasse en produits d'amendement, engrais et/ou substances favorisant la végétation, dans lequel la biomasse entassée ou, le cas échéant, broyée est soumise aux influences des processus de décomposition naturelle jusqu'à obtention du degré de transformation souhaité, dans lequel la biomasse est pratiquement entourée de tous les côtés d'une couche de recouvrement, caractérisé en ce que la couche de recouvrement (2, 6, 7, 8) est constituée par une matière organique finement broyée correspondant pratiquement à la granulométrie de la sciure et ayant une épaisseur telle que les substances volatiles issues de la transformation sont pratiquement complètement retenues.

2. Procédé selon la revendication 1,
caractérisé en ce que la couche de recouvrement (2, 6, 7, 8) est constituée de bois, d'écorce d'arbre, de paille, de tiges de maïs, de tiges de tournesol, de tiges de millet, de tiges d'artichaut, de trèfle, de luzerne, d'alfa, de pennisètes, de cotonniers, de cannes à sucre, de roseaux, et/ou de restes de phytomasse secs durs et structurés de manière analogue.

3. Procédé selon la revendication 1 ou la revendication 2,
caractérisé en ce que la biomasse récoltée sous faible insolation est déposée en un état frais ou, le cas échéant, humide de pluie, ou humecté en conséquence.

4. Procédé selon l'une quelconque des revendications 1 à 3,
caractérisé en ce que la biomasse constituée de différentes matières est disposée en couches superposées (2 à 6) de manière à ce que chaque couche soit pratiquement constituée par une biomasse d'une même matière.

5. Procédé selon la revendication 4,
caractérisé en ce que,
la couche la plus basse (2) fait partie de la couche de couverture et est constituée de bois concassé jusqu'à obtention d'une granulométrie correspondant à de la sciure,
la couche suivante (3) reposant sur la première est constituée essentiellement de verdure,
la couche suivante (4) reposant sur la deuxième, est constituée essentiellement de paille superficiellement humide,
la couche suivante (5) reposant sur la troisième, est constituée essentiellement de fumier avec une teneur en bouse de vache ; et en ce qu'une autre couche (6) est disposée qui fait partie de la couche de recouvrement constituée essentiellement de bois concassé jusqu'à obtention d'une granulométrie correspondant à de la sciure.

6. Procédé selon la revendication 5,
caractérisé en ce que la couche la plus basse (2) de bois concassé a une épaisseur dans une fourchette allant de 10 cm à 30 cm, de préférence, de 20 cm environ.

7. Procédé selon la revendication 5 ou la revendication 6,
caractérisé en ce que la couche la plus basse (2) de bois concassé représente 25 % environ du volume total des quatre couches inférieures.

8. Procédé selon l'une quelconque des revendications 5 à 7,
caractérisé en ce que la couche de verdure (3) contient des matières vertes hachées, en particulier broyées, telles que des feuilles, des tiges, des brins, de l'herbe, des branches ou analogues.

9. Procédé selon l'une quelconque des revendications 5 à 8,
caractérisé en ce que la couche de verdure (3) a une épaisseur dans une fourchette allant de 10 cm à 40 cm environ.

10. Procédé selon l'une quelconque des revendications 5 à 9,
caractérisé en ce que la couche de verdure (3) représente 40 % environ du volume total des quatre couches inférieures.

11. Procédé selon l'une quelconque des revendications 8 à 10,
caractérisé en ce qu'immédiatement après la construction, une ouverture est pratiquée dans les parties latérales (7, 8) de la couche de recouvrement à la hauteur de la couche de verdure (3) et qui est fermée après un certain temps.

12. Procédé selon la revendication 11,
caractérisé en ce que l'ouverture est fermée après deux jours environ.

13. Procédé selon l'une quelconque des revendications 5 à 12,
caractérisé en ce que la couche de paille (4) a une épaisseur dans une fourchette allant de 10 cm à 30 cm environ.

14. Procédé selon l'une quelconque des revendications 5 à 13,
caractérisé en ce que la couche de paille (4) représente 30 % environ du volume total des quatre couches inférieures.

15. Procédé selon l'une quelconque des revendications 5 à 14,
caractérisé en ce que la couche de paille (4) est constituée de paille non broyée, déposée, si possible au moment où elle est la plus volumineuse.

16. Procédé selon l'une quelconque des revendications 5 à 15,
caractérisé en ce que la couche de paille (4) contient également, en plus de la paille, du foin sec, des roseaux, des feuilles ou analogues.

17. Procédé selon l'une quelconque des revendications 5 à 16,
caractérisé en que la couche de fumier (5) est constituée de bouse de vache, étalée en la décompactant et en ce qu'elle représente 3 % environ du volume total des quatre couches inférieures.

18. Procédé selon l'une quelconque des revendications 5 à 17,
caractérisé en ce qu'au-dessus de l'autre couche de recouvrement (6) une ou plusieurs séries de couches peuvent être déposées comprenant chacune une couche de verdure, une couche de paille reposant sur la première de la série, une couche de fumier reposant sur la deuxième, et une couche de bois concassé, reposant sur le dessus.

19. Procédé selon l'une quelconque des revendications 5 à 18,
caractérisé en ce que toutes les couches sont disposées pratiquement horizontalement.

20. Procédé selon l'une quelconque des revendications 5 à 19,
caractérisé en ce que toutes les couches sont en pente selon un angle non nul par rapport à l'horizontale.

21. Procédé selon la revendication 20,
caractérisé en ce que deux séries de couches sont disposées avec une pente opposée mais selon un angle pratiquement identique de manière à être adjacente l'une à l'autre.

22. Procédé selon l'une quelconque des revendications 5 à 21,
caractérisé en ce que les couches forment une meule.

Fig. 2

Fig. 1

EP 0 356 816 B1